# EUROPEAN PATENT APPLICATION

(11) **EP 4 778 955 A1**
(43) Date of publication of application: **22.07.2026**
(21) Application number: 25152362.7
(22) Date of filing: 16.01.2025
(51) Int. Cl.: C08G 59/42

(54) **EXPANDABLE ONE-COMPONENT THERMOSETTING EPOXY RESIN ADHESIVE WITH IMPROVED IMPACT RESISTANCE AND ADHESION**

(71) Applicant: Sika Technology AG, 6340 Baar (CH)
(72) Inventor: WEN, Weijian, Madison Heights, 48071 (US)
(74) Representative: Sika Patent Attorneys

(57) **Abstract**

The present invention relates to a one-component thermosetting epoxy resin adhesive, comprising at least one metal acrylate based latent hardener and at least one toughness improver based on synthetic rubber, preferably an ethylene vinyl acetate copolymer. The expandable one-component thermosetting epoxy resin adhesive have good adhesion on metal substrates, sufficient expansion rates and improved impact resistance.

## Description

### Technical field

The present invention pertains to the field of expandable one-component thermosetting epoxy resin adhesives and also to the use thereof particularly in vehicle construction. In particular, the present invention relates to expandable one-component thermosetting epoxy adhesives that exhibits improved impact resistance and good adhesion, especially to oily metal substrates.

### Prior art

Expandable epoxy adhesives are widely used as structural adhesives in industries such as automotive, aerospace, and construction, where structural bonding and sealing are required in environments exposed to high stress, temperature variations, and dynamic loads. These structural adhesives offer excellent strength, thermal stability, and gap-filling capabilities, making them suitable for bonding metals, plastics, and composites. When cured, expandable epoxy adhesives provide a strong bond and structural reinforcement, making them indispensable in applications such as bonding automotive panels, stiffening body structures, and sealing joints.

Thermosetting, expandable one-component epoxy resin adhesives have already been used for some considerable time as structural adhesives in body construction.

An important application of expandable one-component thermosetting epoxy resin compositions, accordingly, is in vehicle construction, where typically there are metal substrates such as steel sheets and aluminium present, particularly in the context of adhesive bonding. Following the application of the epoxy resin composition, the bodywork is heated in the CEC (cathodic electrocoating) oven, by means of which the thermosetting epoxy resin composition is cured.

In vehicle assembly, metal surfaces, particularly cold rolled steel, are often contaminated with oily substances. These oils are typically applied during the manufacturing process to protect the metal from corrosion and to aid in the forming and shaping of the steel. Thus, cold rolled steel, commonly used in vehicle construction for its affordability, poses a challenge for adhesive bonding due to oils that interfere with adhesion. The presence of oils necessitates the development of adhesives that can bond effectively to oily surfaces, ensuring strong adhesion without the need for extensive surface cleaning or preparation.

Expandable one-component thermosetting epoxy resin adhesives used in vehicle assembly must fulfill several stringent requirements, especially strong adhesion to metal substrates such as steel sheets (particularly oiled steel) and aluminum, adequate expansion rates, enhanced crash or impact resistance and good ductility. Achieving these performance standards presents considerable challenges.

Extensive research has been carried out to overcome these challenges. Most efforts have focused on developing compositions and processes using various epoxy-based compositions, resins, and additives. The goal is to enhance expansion percenatge, impact resistance, adhesion, and other crucial adhesive properties. However, a key challenge remains achieving the right balance between different mechanical and adhesive properties, particularly compression strength, ductility, expansion percentage and adhesion.

Traditional epoxy adhesives commonly use curing agents like dicyandiamide (DICY) or urea to achieve the desired cure profile and mechanical properties. However, DICY curing systems have several limitations that can hinder their performance in certain applications. One major drawback is the unpleasant odor, as both DICY and urea-cured systems tend to emit a fishy amine smell, which can be undesirable in many settings. Additionally, adhesion to zinc-based metals, especially those with oily surfaces, can be inconsistent, resulting in spotty performance depending on the elastomer or formulation used. Another challenge with DICY systems is their poor response at lower cure temperatures, particularly below 140°C, which limits their application in scenarios requiring low-temperature curing. The use of traditional curing agents can also negatively impact the adhesive's overall performance, especially in terms of ductility, adhesion to oily metal substrates, and compression modulus.

Another common challenge in formulating one-component epoxy adhesives is the inherent brittleness, particularly when the bonded materials are subjected to impact or dynamic stress. In an effort to enhance the performance of expandable epoxy adhesives, commercial tougheners (or toughness improvers) have been introduced. These tougheners improve the ductility and toughness of the adhesive, making it more resistant to impact and fatigue. However, when used in conjunction with traditional curing agents like DICY or urea, these tougheners often result in a lower compression modulus, which compromises the stiffness and load-bearing capacity of the bonded structure.

Therefore, when using traditional curing systems like DICY or urea, achieving high toughness and good adhesion to oily metal substrates often necessitates custom-made intermediates or specific toughness improvers. This requirement adds complexity and cost to the formulation process. Thus there is need for an alternative approach that allows for the use of commercially available toughness improvers to enhance ductility and adhesion, without the detrimental effects on compression modulus, as is often the case with traditional curing systems.

One approach could involve using an alternative curing agent or mechanism instead of DICY or urea. However, this would require significant experimentation and optimization to achieve the proper balance of desired adhesive and mechanical properties.

The demand for an expandable epoxy resin adhesive that can provide the desired ductility, maintain compression modulus, and ensure proper expansion, while avoiding the use of expensive and complex intermediates, remains unmet. Thus, it is highly desirable to develop novel expandable epoxy resin adhesives that not only offer improved ductility and enhanced adhesion to oily metal surfaces but also maintain or increase the compression modulus along with the sufficient expansion rate. This advancement would enable the creation of high-performance expandable epoxy resin adhesives that meet the stringent requirements of industrial bonding and reinforcement applications.

### Summary of the invention

It is an object of the present invention, therefore, to provide an expandable one-component thermosetting epoxy resin adhesive that have good adhesion on metal substrates, sufficient expansion rates, good ductility and excellent impact resistance.

Surprisingly it has been found that this object can be achieved with the one-component thermosetting epoxy resin adhesive as defined in Claim 1.

Further aspects of the invention are subjects of further independent claims. Particularly preferred embodiments of the invention are subjects of the dependent claims.

### Certain embodiments of the invention

The present invention therefore relates to a one-component thermosetting epoxy resin adhesive, comprising:
a) at least one epoxy resin **A** having on average more than one epoxide group per molecule;
b) at least one latent hardener **H** for epoxy resins, wherein the latent hardener **H** is metal acrylate, preferably metal diacrylate, more preferably Zinc diacrylate (ZDA);
c) at least one physical and/or chemical blowing agent **BA;** and
e) at least at least one toughness improver **D,** wherein the toughness improver **D** is a synthetic rubber, preferably a copolymer of ethylene and vinyl acetate, more preferably an ethylene vinyl acetate rubber, wherein the amount of toughness improver **D** being from 5 - 40 wt.-%, based on the total weight of the one-component thermosetting epoxy resin adhesive.

The epoxy resin adhesive is one-component, meaning that the constituents of the epoxy resin adhesive, more particularly the epoxy resin and the hardener, are present in one component, without curing taking place at usual ambient temperature or room temperature. The one-component epoxy resin adhesive is therefore storage-stable. It can therefore be handled in this form, whereas with two-component systems the components cannot be mixed until immediately prior to use.

The curing of the one-component epoxy resin adhesive is accomplished by heating, typically at a temperature of more than 70°C, as in the range from 100 to 220°C, for example.

### Definitions:

The prefix "poly" in expressions such as polyol or polyisocyanate denotes that the compound has two or more of the stated groups. A polyisocyanate, for example, is a compound having two or more isocyanate groups.

The expression "independently of one another" as used below means that in the same molecule, two or more identically denoted substituents may have identical or different meanings in accordance with the definition.

The dashed lines in the formulae in this document represent in each case the bond between the substituent in question and the associated remainder of the molecule.

Room temperature refers here to a temperature of 23°C, unless otherwise indicated.

The term "latent hardener" refers to a type of curing agent used in coatings, adhesives, and resins that remains inactive or "latent" at room temperature. It only becomes active and initiates the curing process when exposed to a specific condition, such as heat, pressure, or UV light. This property allows for extended pot life (workability) and delayed curing until the desired activation occurs.

In the context of the present invention, the term "ductility" describes the adhesive's ability to undergo significant plastic deformation before breaking. It encompasses not only "elongation" but also the material's ability to absorb and dissipate energy during deformation. Ductility is a broader term that includes how well the adhesive can deform under various types of stresses (tensile, compressive, or shear) and still maintain its structural integrity. The relationship between elongation and ductility in an epoxy adhesive system is that both are indicators of the adhesive's flexibility and ability to handle stress. While elongation specifically measures how much the adhesive can stretch, ductility encompasses the overall ability of the adhesive to deform and absorb stress without failing. An adhesive with high elongation is often ductile, but ductility also considers other factors like energy absorption and deformation under different stress conditions. Thus, a highly ductile adhesive will typically exhibit good elongation, but elongation alone does not fully capture the adhesive's overall ductility.

The term "modulus" refers to the modulus of elasticity or stiffness of the adhesive material. It measures the adhesive's ability to resist deformation under an applied stress within the elastic range, where the material will return to its original shape once the stress is removed. For structural adhesives, the modulus is a critical property because it affects the overall performance of the bonded joint. High modulus adhesives are stiffer and less prone to deformation. They are suitable for applications where the bonded joint needs to maintain its shape under load, providing high structural integrity. Low modulus adhesives are more flexible and can absorb more deformation. They are ideal for applications where the bonded materials may experience differential movement or thermal expansion, as they can accommodate more strain without failing. They are used in applications requiring vibration damping, flexibility, or bonding of dissimilar materials with different coefficients of thermal expansion.

The term "compression modulus", also known as the modulus of compression or compressive modulus, is a material property that describes its ability to resist deformation under compressive forces. It quantifies the stiffness of a material when subjected to compression, reflecting how much it will compress (reduce in size) under a given amount of pressure. Mathematically, the compression modulus is the ratio of compressive stress to compressive strain within the elastic limit of the material. It is typically expressed in units of pressure, such as pascals (Pa) or megapascals (MPa). In engineering and materials science, a higher compression modulus indicates that the material is stiffer and less likely to deform under compressive loads, while a lower modulus means the material is more flexible or compliant under pressure.

The "glass transition temperature" (abbreviated as Tg) refers to the temperature at which an amorphous material (such as glass, polymers, or some plastics) transitions from a hard and brittle "glassy" state to a soft and rubbery or viscous state. In the context of adhesives, the glass transition temperature (Tg) refers to the temperature at which the adhesive transitions from a hard, rigid state to a soft, flexible, or rubbery state.

The terms "toughness improver", "toughening agent", and "toughener" have been used interchangeably in the present patent application. Each of these terms refers to additives or modifiers that are used in materials, particularly in adhesives, coatings, and polymers, to enhance their mechanical properties. Toughness improvers specifically enhances the material's ability to absorb energy and deform without fracturing, thereby improving ductility, impact resistance, and durability. These additives are particularly important in applications where materials are subject to high stress, such as in construction, automotive, and industrial settings. In the context of epoxy resins, toughness improvers are often added to balance out the inherent brittleness of the cured resin without significantly compromising other mechanical properties, such as the compression modulus. Common types of toughness improvers include elastomers, thermoplastics, and certain additives like carboxyl-terminated butadiene acrylonitrile (CTBN) rubber. These improvers allow the material to maintain or enhance its adhesive strength while improving its ability to withstand impact, mechanical stress, and deformation.

In adhesives, the term "cylinder density" refers to the density measurement of the adhesive material in a cylindrical container, often used to understand its mass-to-volume ratio. This metric can be critical because the density affects adhesive spreadability, layer thickness, bonding strength, and application precision. Higher density adhesives generally provide a thicker bond line and may be more robust, while lower density adhesives might offer lighter, more flexible bonding options. Cylinder density is often measured in grams per cubic centimeter (g/cm³) or pounds per gallon (Ib/gal), depending on the formulation and application method.

Unless defined otherwise, all technical and scientific terms used herein have the same meaning as commonly understood by those of ordinary skill in the art.

As set forth above, there is pressing need to develop improved one-component thermosetting epoxy resin adhesive. Disclosed herein are new improved one-component thermosetting epoxy resin adhesive that has good adhesion on metal substrates, sufficient expansion rates, good ductility and excellent impact resistance.

### Epoxy resin A

The thermosetting one-component epoxy resin composition comprises at least one epoxy resin **A** having on average more than one epoxide group per molecule. The epoxide group is preferably in the form of a glycidyl ether group.

The fraction of the epoxy resin **A** having on average more than one epoxide group per molecule is preferably from 30 - 90 wt.-%, 35 - 85 wt.-%, 40 -75 wt.-%, more preferably 45 - 60 wt.-%, based on the total weight of the one-component thermosetting epoxy resin composition.

The epoxy resin **A** having on average more than one epoxide group per molecule is preferably a liquid epoxy resin or a solid epoxy resin, more preferably a solid epoxy resin. The term "solid epoxy resin" is very familiar to the person skilled in the epoxide art and is used in contrast to "liquid epoxy resins". The glass transition temperature of solid resins is above room temperature, meaning that at room temperature they can be comminuted into pourable powders. It is preferred if more than 70 wt.-%, more preferred more than 80 wt.-%, more than 90 wt.-%, more than 95 wt.-%, more than 98 wt.-%, of the epoxy resin **A** is a solid epoxy resin.

Preferred epoxy resins have the formula (II)

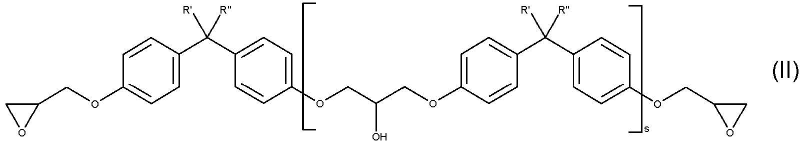

In this formula, the substituents R' and R" independently of one another are either H or CH₃.

In solid epoxy resins, the index s has a value of > 1.5, more particularly from 2 to 12.

Solid epoxy resins of this kind are available commercially, for example, from Dow or Huntsman or Hexion.

Compounds of the formula (II) having an index s of 1 to 1.5 are referred to by the person skilled in the art as semi-solid epoxy resins. For the purposes of the present invention, they are considered likewise to be solid resins. Preferred solid epoxy resins, however, are epoxy resins in the narrower sense, in other words where the index s has a value of > 1.5.

In the case of liquid epoxy resins, the index s has a value of less than 1. Preferably s has a value of less than 0.2.

The resins in question are therefore preferably diglycidyl ethers of bisphenol A (DGEBA), of bisphenol F and also of bisphenol A/F. Liquid resins of these kinds are available for example as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Hexion).

Of further suitability as epoxy resin **A** are what are called epoxy novolacs. These compounds have, in particular, the following formula: 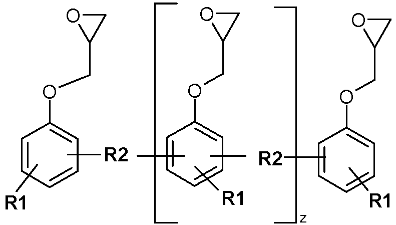 where 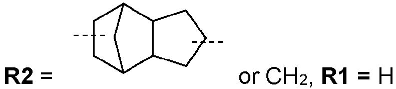 or methyl and z = 0 to 7.

More particularly these are phenol-epoxy or cresol-epoxy novolacs (R2 = CH₂).

Epoxy resins of these kinds are available commercially under the tradename EPN or ECN and also Tactix^{®}from Huntsman, or within the product series D.E.N.^{™} from Dow Chemical.

Preferably, the epoxy resin **A** is a solid epoxy resin. The epoxy resin **A** is preferably a solid epoxy resin of the formula (II).

### Curing agent (Latent hardener H):

The thermosetting one-component epoxy resin adhesive comprises at least one curing agent. In particular, the thermosetting one-component epoxy resin adhesive comprises at least one latent hardener **H** for epoxy resins.

Latent hardeners are substantially inert at room temperature and are activated by elevated temperature, typically at temperatures of 70°C or more, thereby initiating the curing reaction.

Instead of convention curing agents, the present invention utilises a curing agent or latent hardener **H** containing an effective amount of at least one metallic acrylate, metal diacrylate, monomethylacrylate, dimethacrylate compounds, or similar substances.

Without wishing to be bound by any theory, it is believed that the use of metallic acrylate may improve the hardness, compression and resilience, increase the affinity between material and metal, enhance compatibility between materials, and improve mechanical strength and adhesion between plastic materials.

The structure of common metallic acrylate is shown as follows: 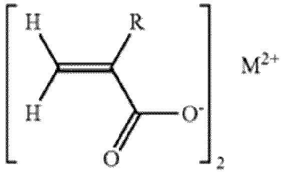 wherein M²⁺ is a divalent metal ion, and R is a hydrogen group (-H) or a methyl group (-CH₃). Common metallic acrylates are, for example, zinc diacrylate (ZDA), calcium diacrylate, zinc dimethacrylate (ZDMA) and fatty acid modified zinc diacrylate.

While any suitable metal diacrylate can be employed, examples of suitable diacrylates comprise at least one member selected from the group consisting of zinc diacrylate (ZDA), zinc dimethacrylate (ZDMA), magnesium diacrylate, aluminum diacrylate, aqueous solutions of metal acrylate monomers, among others. Particularly prefered are Zinc diacrylates and zinc dimethacrylates (e.g., ZDA and ZDMA).

Preferably, the latent hardener **H** is metal acrylate, preferably metal diacrylate, more preferably Zinc diacrylate (ZDA).

Preferably, the latent hardener **H** of the present invention is substantially free of conventional curing agents. By substantially free of conventional curing agents, it is meant that an epoxy functional compound (or other compound curable with metal diacrylates or dimethacrylates), is cured while in the presence of less than about 0.1 to about 1.0 wt. % (e.g., about 0% of conventional epoxy curing agents) of the following compounds polyamides, dicyandiamides, imidazoles, imidazole compounds, amines, ureas, boron triflouride and complexes, polysulfides, anhydrides, melamines, amidoamines, phenol/formaldehyde, among other conventional curing agents. While the present invention can be practiced in combination with such conventional curing agents, the present invention obviates the necessity of such compounds, among other benefits.

Preferably, the fraction of the latent hardener **H** is 1 - 25 wt.-%, more preferably 10 - 20 wt.-%, based on the total weight of the one-component thermosetting epoxy resin adhesive.

The cure response of the Latent Hardener **H** of the present invention is advantageous over systems cured with dicyandiamide or other conventional cures.

Suitable examples of commercially available latent hardeners **H** that may be utilized in the present invention include are, but are not limited to, SR 633, SR 634, SR 705, SR 706, and SR 709 from Arkema; Dymalink 633, Dymalink 634, Dymalink 705 and Dymalink 706 from CRAY VALLEY; CN9016, CN2401, and CN2400 from Aditya Birla Chemical; M Cure 204 from Recon Chemicals; Nipol 1072 from Zeon; ; K-CURE 339, K-CURE 439, K-CURE 633 and K-CURE 634 from SUNKO INK; ZN-DA 90 and ZN-DA 100 from Nippon Shokubai Co., Ltd. and aqueous solutions of zinc acrylate combined with a non-metallic acrylate monomer, such as CD-664 and CD-665 from Cardolite Corporation. Particularly prefered latent hardener **H** is Dymalink 633.

### Physical and/or chemical blowing agent BA:

The one-component thermosetting epoxy resin composition comprises at least one physical and/or chemical blowing agent **BA.**

Chemical blowing agents are organic or inorganic substances which, under the influence of temperature, humidity, electromagnetic radiation or chemicals, form or split off gaseous substances. Such substances are in particular azo-dicarbonamides, sulfohydrazides, hydrogen carbonates or carbonates. Compounds can be used as physical blowing agents which, for example when the temperature, pressure or volume changes, in particular when the temperature rises, change to the gaseous state of matter and thus form a foam structure through volume expansion. Such physical blowing agents are in particular liquids which evaporate at elevated temperature. Furthermore, gases or low-boiling liquids can be used as physical blowing agents, which are introduced into the composition in microencapsulated form. Both chemical and physical blowing agents are able to produce foam structures in polymer compositions.

Preferred physical blowing agents are expandable microspheres, consisting of a thermoplastic shell which is filled with thermally expandable liquids or gases. Such microspheres are commercially available, for example, under the trade name Expancel^{®} from Akzo Nobel, the Netherlands.

The at least one physical or chemical blowing agent **BA** preferably has an activation temperature from 120 °C to 220 ° C., preferably from 140 ° C to 200 ° C.

Preferably, the blowing agent **BA** is a physical or chemical blowing agent preferably selected from p,p'-Oxybisbenzolsulfonylhydrazide and dry powder of unexpanded thermoplastic microspheres.

Preferably, the fraction of the blowing agent **BA** is 0.1-7.5 wt.-%, preferably 0.5-5 wt.-%, more preferably 1-4 wt.-% based on the total weight of the the one-component thermosetting epoxy resin adhesive.

### Toughness improver D:

The one-component thermosetting epoxy resin composition comprises at least one toughness improver **D.**

Cured epoxies tend to be brittle, exhibiting poor resistance to crack initiation and propagation. Their mechanical properties, particularly toughness, can be enhanced by introducing a rubbery phase into the resin matrix. Additionally, the epoxy matrix can be modified using other methods, such as the inclusion of thermoplastics and particulate fillers. This toughening process improves both fracture toughness and impact resistance.

Enhancing the toughness of epoxy resin through the addition of appropriate toughening agents or chemical modification is an effective way to improve its energy absorption capacity. Beyond increasing toughness, this also enhances impact resistance, elongation, and resistance to crack propagation. However, since cured epoxy resins require high strength and modulus, it is essential that the toughening process does not significantly compromise these properties.

Toughness modification of epoxy resins can be achieved through various approaches, which can be categorized into (i) elastomer modification, (ii) particulate modification, (iii) thermoplastic modification, and (iv) other miscellaneous methods. Among these, the most effective toughening technique has been the incorporation of a secondary elastomeric phase into the rigid epoxy matrix.

In particular, impact modifcation is achieved by incorporating rubber domains into the polymer matrix, which, of course, must fit well within the matrix. The mechanism for impact improvement depends on the rubber component being able to absorb impact energy without the propagation of crazes and cracks.

The present invention uses a toughness improver **D,** wherein the toughness improver **D** is a synthetic rubber, preferably a copolymer of ethylene and vinyl acetate, more preferably an ethylene vinyl acetate rubber.

Ethylene vinyl acetate (EVA) is advantegous in absorbing and dissipating energy during impact, reducing the likelihood of cracking or breaking under stress. It is believed that its elastomeric properties provide excellent shock absorption, making it particularly effective in enhancing the resilience of rigid polymers.

Suitable ethylene-vinyl acetate copolymer resins include, but are not limited to, thermoplastic ethylene-vinyl acetate copolymer resins containing at least about 28 percent by weight vinyl acetate. The vinyl acetate content in EVA is believed to contribute in improving flexibility and toughness. In one embodiment of the present invention, the ethylene-vinyl acetate copolymer comprises a thermoplastic copolymer containing at least about 28 percent by weight vinyl acetate, desirably at least about 40 percent by weight vinyl acetate, more desirably at least about 50 percent by weight vinyl acetate, and even more desirably at least about 60 percent by weight vinyl acetate by weight of the copolymer. In a further embodiment of the present invention, the ethylene-vinyl acetate copolymer contains an amount of vinyl acetate ranging from about 28 to about 99 weight percent of vinyl acetate, desirably from about 40 to about 90 weight percent of vinyl acetate, more desirably from about 50 to about 90 weight percent of vinyl acetate, and even more desirably from about 60 to about 80 weight percent vinyl acetate in the copolymer.

In EVA (ethylene-vinyl acetate) copolymers, GMA (glycidyl methacrylate) content refers to the proportion of glycidyl methacrylate incorporated into the EVA structure. Adding GMA can introduce reactive epoxy groups, enhancing adhesion, compatibility with other materials, and cross-linking capabilities, which are especially advantageous in applications requiring improved bonding or chemical resistance. However, not all EVA compositions include GMA; it's usually added when specific functional properties are desired in applications like coatings, adhesives, and packaging materials.

Preferably, the ethylene-vinyl acetate copolymer contains GMA content of more than 2.5 wt.-%, preferably more than 5 wt.-%.

Preferably, the fraction of the toughness improver **D** is 2 - 20 wt.-%, more preferably 5-15 wt.-%, based on the total weight of the one-component thermosetting epoxy resin adhesive.

Suitable ethylene vinyl acetate copolymers are commercially available, for exmaple, under the trade name of Escorene^{®} (from Exxon Mobil), under the trade name of Primeva^{®} (from Repsol Quimica S.A.), under the trade name of Evatane^{®} (from Arkema Functional Polyolefins), under the trade name of Greenflex^{®} (from Eni versalis S.p.A.), under the trade name of Levapren^{®} (from Arlanxeo GmbH), and under the trade name of Elvaloy^{®} (from Dupont).

Examples of commercially available ethylene-vinyl acetate copolymers, which may be used in the present invention include, but are not limited to, the Elvax series, including ELVAX^{™} 150, 210, 250, 260, and 265 from E. I. Du Pont de Nemours and Co., Wilmington, Del., the ATEVA^{™} series from Celanese, Inc., Irving, Tex.; the LEVAPREN^{™} 400 from Bayer Corp., Pittsburgh, Pa. including, LEVAPREN^{™} 450, 452, and 456 (45 weight percent vinyl acetate); LEVAPREN^{™} 500 HV (50 weight percent vinyl acetate); LEVAPREN^{™} 600 HV (60 weight percent vinyl acetate); LEVAPREN^{™} 700 HV (70 weight percent vinyl acetate); and LEVAPREN^{™} KA 8479 (80 weight percent vinyl acetate), each from Lanxess Corp. Levapren NPG VP, an ethylene-vinyl acetate-glycidyl methacrylate terpolymer (EVM-GMA) with 60 wt % vinyl acetate and dusted with separating agents (silica and talc), available from Arlanxeo.

A particularly preferred toughness improver **D** is LEVAPREN, preferably Levapren NPG VP.

### Wax:

In one preferred embodiment, the one-component thermosetting epoxy resin adhesive further comprises a **wax**.

Preferably, the fraction of the **wax** is 1 - 10 wt.-%, 1.5 - 7.5 wt.-%, 2 - 5 wt.-%, more preferably 2 - 3 wt.-%, based on the total weight of the one-component thermosetting epoxy resin adhesive.

### Fiber:

In one preferred embodiment, the one-component thermosetting epoxy resin adhesive further comprises at least one **fiber,** preferably, the fraction of the **fiber** is 1 - 25 wt.-%, 1.5 - 20 wt.-%, 2 - 15 wt.-%, more preferably 5 - 15 wt.-%, based on the total weight of the one-component thermosetting epoxy resin adhesive.

### Filler F:

The one-component thermosetting epoxy resin adhesive may further comprise at least one filler **F.** Preference here is given to mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminium hydroxide, magnesium oxide, hollow ceramic beads, hollow glass beads, hollow organic beads, glass beads, colour pigments. Particularly preferred are fillers selected from the group consisting of calcium carbonate, calcium oxide and fumed silicas.

Preferably, the fraction of the filler **F** is 5 - 40 wt.-%, based on the total weight of the one-component thermosetting epoxy resin adhesive.

### Others/Miscellaneous:

The one-component thermosetting epoxy resin adhesive may comprise further constituents, especially stabilizers, particularly heat and/or light stabilizers, plasticizers, solvents, dyes and pigments, corrosion inhibitors, surfactants, defoamers and adhesion promoters.

The one-component thermosetting epoxy resin adhesive is solid at room temperature.

The one-component thermosetting epoxy resin adhesive has a viscosity of 500 to 5000 Pas at 80°C. Preferably, the viscosity is from 500 to 2000 Pas, 500 to 1500 Pas, preferably 500 to 1300 Pas at 80°C. The viscosity is determined oscillographically by means of a rheometer with heatable plate (MCR 301, AntonPaar) (slot 1000 µm, measuring plate diameter: 25 mm (plate/plate), deformation 0.01 at 5 Hz, temperature: 80°C).

Preferably, the one-component thermosetting epoxy resin adhesive has an expansion percentage in the range of 100-350%, preferably between 200-300% at a temperature of 180°C for 30 minutes, wherein the expansion is determined as described in the experimental part.

A particularly preferred one-component thermosetting epoxy resin adhesive comprises:
a) 45-60 wt.-% of at least one epoxy resin **A** having on average more than one epoxide group per molecule;
b) 10-20 wt.-% of at least one latent hardener **H** for epoxy resins, wherein the latent hardener **H** is Zinc diacrylate (ZDA);
c) 1-4 wt.-% of at least one physical or chemical blowing agent **BA;**
e) 5-15 wt.-% of at least at least one toughness improver **D,** wherein the toughness improver **D** is a copolymer of ethylene and vinyl acetate, preferably an ethylene vinyl acetate rubber;
f) 5-15 wt.-% of at least one **fiber,** preferably a glassfiber; and
g) 1-20 wt.-% of at least one filler **F,** wherein the weight percentages are based on the total weight of the one-component thermosetting epoxy resin adhesive.

It may further be advantageous if the preferred one-component thermosetting epoxy resin adhesive consists to an extent of more than 80 weight%, preferably more than 90 weight%, more particularly more than 95 weight%, especially preferably more than 98 weight%, most preferably more than 99 weight%, based on the total weight of the epoxy resin adhesive, of the aforementioned constituents.

In yet another aspect, the present invention advantageously relates to a cured composition obtained by heat curing the one-component thermosetting epoxy resin adhesive according to the present invention, wherein the said cured composition is characterized by one or more of the following properties:
a) compression strength in the range of 5 - 20 MPa, preferably 6-15 MPa, wherein the compression strength is determined as described in the application;
b) compression modulus 100 MPa to 500 MPa, preferably 150 MPa to 400 MPa at 25°C, wherein the compression modulus is determined as described in the application; and
c) ductility above 70%, preferably above 80 %, wherein the ductility being determined is determined as described in the application.

In yet another aspect, the present invention relates to a reinforcement element comprising the one-component thermosetting epoxy resin composition according to the present invention, in particular for reinforcement in the cavities of structural components, preferably in bodies and / or frames of means of transport and transportation.

The one-component thermosetting epoxy resin composition is preferably applied or attached to a carrier part.

This carrier part can consist of any materials. Preferred materials are plastics, in particular polyurethanes, polyamides, polyesters and polyolefins, preferably high-temperature-resistant polymers such as poly (phenylene ethers), polysulfones or polyethersulfones, which in particular are also foamed; Metals, especially aluminum and steel; or any combination of these materials.

Furthermore, the carrier part can have any structure and structure. For example, it can be solid or hollow or have a lattice-like structure. The surface of the carrier part can typically be smooth, rough or structured. The carrier part can also contribute to the structural reinforcement in addition to its function as a carrier for the foamable material.

It is also possible that reinforcing elements have no carrier part and consist entirely of the one-component thermosetting epoxy resin composition.

The reinforcement elements comprising a carrier part and the one-component heat-curing epoxy resin composition are preferably produced by injection molding.

If the carrier part consists of a material that can be processed by injection molding, a two-component injection molding process is usually used. First, a first component, in this case the carrier part, is injected. After this first component has solidified, the cavity in the mold is enlarged or adapted, or the molded part is placed in a new mold, and a second component, in this case the the one-component thermosetting epoxy resin composition, is molded onto the first component with a second injection unit. If the carrier part consists of a material that cannot be produced by the injection molding process, for example of a metal, the carrier part is placed in an appropriate tool and the epoxy resin composition is injection molded onto the carrier part.

Of course, there is also the possibility of fastening the one-component thermosetting epoxy resin composition to a carrier part by any other fastening means or method.

For the reinforcing elements mentioned, it is further advantageous if the one-component thermosetting epoxy resin composition can be foamed and cured thermally, at a temperature from 120 °C to 220 ° C., preferably from 140 ° C to 200 ° C, preferably within a time period at said temperature of 10 to 60 min.

Furthermore, the invention comprises the use of a reinforcing element, as described above, for reinforcing cavities in structural components. Structural components of this type are preferably used in bodies and / or frames of means of transport and transportation, in particular of vehicles on water or on land or on air. The invention preferably includes the use of a reinforcing element according to the invention in bodies or frames of automobiles (in particular A, B, C or D pillars) trucks, railroad cars, boats, ships, helicopters and airplanes, mostly preferably in automobiles.

A further aspect of the present invention therefore relates to a method for reinforcing structural components comprising the steps
i) placing a reinforcement element according to the previous description in a cavity of a structural component, preferably in bodies and / or frames of means of transport and transportation;
ii) heating the reinforcement element to a temperature from 120 °C to 220 °C, preferably from 140 °C to 200 °C, preferably for 10 to 60 min.

Preferably, step i) takes place before step ii).

The invention is elucidated further in the text below by means of examples which, however, are not intended to restrict the invention in any way.

### Examples

Raw materials used for preparing the inventive compositions of the present invention are as outlined in the Table 1 below:

| **Table 1: Raw Materials** | | |
|---|---|---|
| **Raw materials used** | **Description** | **Supplier** |
| Epoxy resin **A** | KD-2113, KD-211, standard epoxy resin in solid form, obtained from liquid epoxy resin and bisphenol-A, 34.24% | Kukdo Chemical |
| | KD-211G, a low molecular weight solid epoxy resin derived from liquid epoxy resin and bisphenol-A, 20.95% | Kukdo Chemical |
| | YDCN 500-80P, high molecular type, multi-functional epoxy resin. It is derived from o-cresol novolac, 2.00% | Kukdo Chemical |
| Filler | Sericron^{™} Talc 2M | Specialty Minerals |
| Wax | Polyethylene Wax (PE Wax) | BassTech International |
| Fiberglass | StarStran^{®} 706C is produced by chopping E glass fibers coated with a silane based sizing, Filament diameter is Filament diameter is 16µm (ISO 1888) | Johns Manville |
| Curing Agent | Dymalink 633, a modified metallic diacrylate coagent, a solid diacrylate, an anhydrous zinc diacrylate (ZDA) | CRAY VALLEY |
| Chemical Blowing Agent | Unicell OH, chemical blowing agent, p.p'-Oxybis(benzenesulfonylhydrazide), | Unicell |
| Toughness Improver | Epoxyprene 25, epoxidized natural rubber with 25% of double bonds epoxidized | Guthrie Latex |
| | Nipol NX-775, a carboxylated nitrile elastomer | Zeon Chemicals |
| | Levapren NPG VP | |
| Adhesion Promoter. | LICA 38J, a Low VOC organometallic adhesion promoter | Kenrich Petrochemicals |
| FN-78D | Microsphere FN-78D, average particle diameter: 35 - 50 mm, expansion initiation temperature (Ts): 100 - 115 °C, maximum expansion temperature (Tmax): 150- 165 °C. | Matsumoto Yushi Seiyaku Co., Ltd |
| Hardener | Dicyandiamide | Siqma-Aldrich |
| Accelerator | N,N-Dimethylurea | Siqma-Aldrich |
| Filler mix | Aerosil R202 (Pyrogenic silica), Polycal OS325 (Calcium oxide), Winnofil SPT (Calcium carbonate), weight ratio=6:3:5 | Evonik, Fitz Chem Corp., Solvay |

Preparation of the base composition

| **Table 2: Composition Details of Representative Inventive Formulation** | |
|---|---|
| **Raw materials used** | **Wt.-%** |
| KD-2113 | 34.24 |
| KD-211G | 20.95 |
| YDCN 500-80P | 2.00 |
| Marcus Wax M-200 | 2.85 |
| Sericron 2M | 8.55 |
| HDK H18 | 2.61 |
| Starstrand 706C | 11.80 |
| Levapren NPG VP | 10.00 |
| Dymalink 633 | 5.00 |
| Unicell OH | 1.00 |
| FN-78D | 1.00 |
| | |
| Total | 100 |

| **Table 3: Composition Details and Weight Percentages of Raw Materials Used in Preparing Exemplified compositions** | | | | | | | | | | |
|---|---|---|---|---|---|---|---|---|---|---|
| **Raw materials used** | | **Ex. 1** | **Ex. 2** | **Ex. 3** | **Ex. 4** | **Ex. 5** | **Ex. 6** | **Ex. 7** | **Ex. 8** | **Ex. 9** |
| Base Composition | KD-2113 | 34.24 | 34.24 | 34.24 | 34.24 | 34.24 | 34.24 | 34.24 | 34.24 | 34.24 |
| | KD-211G | 20.95 | 20.95 | 20.95 | 20.95 | 20.95 | 20.95 | 20.95 | 20.95 | 20.95 |
| | YDCN 500-80P | 2.00 | 2.00 | 2.00 | 2.00 | 2.00 | 2.00 | 2.00 | 2.00 | 2.00 |
| | Marcus Wax M-200 | 2.85 | 2.85 | 2.85 | 2.85 | 2.85 | 2.85 | 2.85 | 2.85 | 2.85 |
| | Sericron 2M | 8.55 | 10.54 | 8.55 | 10.54 | 8.55 | 10.54 | 8.55 | 9.15 | 1.05 |
| | HDK H18 | 2.61 | 2.61 | 2.61 | 2.61 | 2.61 | 2.61 | 2.61 | 2.61 | 2.61 |
| | Starstrand 706C | 11.80 | 11.80 | 11.80 | 11.80 | 11.80 | 11.80 | 11.80 | 11.80 | 11.80 |
| Tougheners | Levapren NPG VP | - | - | - | - | 10.00 | 10.00 | 10.00 | 10.00 | 17.5 |
| | Blocked Nipol NX-775 | 10.00 | 10.00 | - | - | - | - | - | - | - |
| | Epoxyprene 25 | - | - | 10.00 | 10.00 | - | - | - | - | - |
| Curatives | Dymalink 633 | 5.00 | - | 5.00 | - | 5.00 | | 5.00 | 5.00 | 5.00 |
| | DICY | - | 2.85 | - | 2.85 | - | 2.85 | - | - | - |
| | Aliphatic Urea | - | 0.16 | - | 0.16 | - | 0.16 | - | - | - |
| Blowing Agents | Unicell OH | 1.00 | 1.00 | 1.00 | 1.00 | 1.00 | 1.00 | 1.00 | 1.00 | 1.00 |
| | FN-78D | 1.00 | 1.00 | 1.00 | 1.00 | 1.00 | 1.00 | - | 0.4 | 1.00 |
| | Expancell 930 DU-120 | - | - | - | - | - | - | 1.00 | - | - |
| Total (Wt %) | | 100 | 100 | 100 | 100 | 100 | 100 | 100 | 100 | 100 |

### Viscosity

The viscosity of the exemplified compositions **1- 9** were measured and found to be between 500 to 1300 Pas at 80°C, the viscosity being determined oscillographically by means of a rheometer with heatable plate (MCR 301, AntonPaar) (slot 1000 µm, measuring plate diameter: 25 mm (plate/plate), deformation 0.01 at 5 Hz, temperature: 80°C).

### Adhesion Strength (Lap shear strength)

The Lap shear strength was determined according to SAE J1523 with 0.8 mm-thick hot dip galvanized steel (HDG) coupons, 0.25 mm adhesive bondline thickness, 13 mm length overlap, 13 mm/min pull rate. The samples were cured for 30 min at 180 °C.

### Compression Strength

To prepare samples for estimating compression strength, uncured material is first placed into the middle section of a long cardboard cylinder lined with a release liner. The cardboard cylinder dimensions are specified as 30 mm (1.18 inches) in diameter and 76 mm (3.0 inches) in length. Once assembled, the cylinders are baked at a temperature of 180°C for 40. After curing, the samples are carefully removed from the cardboard containers. Each molded cylinder is then trimmed, cutting a segment from the bottom and sanding the ends to ensure they are squared to a 90-degree angle with a metal square tool. The final length of each sample is adjusted to 60 mm (2.36 inches). Thereafter, the weights of the samples are recorded.

To evaluate compressive strength, each sample is placed between two flat plates of a compressive testing device, such as an Instron or Tinius Olsen, which applies a load to the flat ends of the cylinder at a rate of 12.7 mm (0.5 inches) per minute. The cylinders are compressed to either 15% of their original length or until the compressive load reaches zero. The compressive strength is recorded as the peak load achieved during compression, divided by the cylinder's cross-sectional area.

### Compression Modulus

Compression Modulus is calculated based on compressive strength

### Ductility

Ductility is determined by the compression strength vs compression distance. A ductile material should retain 80% or above strength at 30% strain (compression)

### Expansion

The Expansion is quantified for each sample by measuring the density of a square plague of test material with approximately 25.4x25.4x3.0 mm before and after expansion. The densities were determined according to DIN EN ISO 1183 using the water immersion method (Archimedes principle) in deionized water and a precision balance to measure the mass. The test materials were expanded at 180°C for 30 minutes.

| **Table 4: Comparative Experimental Results With Different Types of Toughness Improving Agents & Curing Systems** | | | | | | | | |
|---|---|---|---|---|---|---|---|---|
| **S. No.** | **Exemplified Composition** | **Cure condition** | **Expansion, %** | **Lap shear (MPa)** | **Compression Strength** | **Compression Modulus (MPa)** | **Cylinder Density (G/CC)** | **Ductility** |
| 1 | Ex. 1 | 180 C, 40 min. | 144 | 2.08 | 26.2 | 1042 | 0.715 | 49% |
| 2 | Ex. 2 | 180 C, 40 min. | 235 | 1.37 | 11.4 | 356 | 0.536 | 86% |
| 3 | Ex. 3 | 180 C, 40 min. | 207 | 2.08 | 13.2 | 616 | 0.567 | 49% |
| 4 | Ex. 4 | 180 C, 40 min. | 197 | 1.04 | 8.89 | 398 | - | 84% |
| 5 | Ex. 5 | 180 C, 40 min. | 247 | 1.54 | 9.1 | 415 | 0.485 | 100% |
| 6 | Ex.6 | 180 C, 40 min. | 227 | 1.94 | 6.73 | 273 | 0.424 | 100% |

| **Table 5: Comparative Experimental Results with different Blowing Agents** | | | | | | | | |
|---|---|---|---|---|---|---|---|---|
| **S. No.** | **Exemplified Composition** | **Cure condition** | **Expansion, %** | **Lap shear (MPa)** | **Compression Strength** | **Compression Modulus (MPa)** | **Cylinder Density (GICC)** | **Ductility** |
| 7 | Ex. 7 | 180 C, 40 min. | 205 | 1.35 | 8.96 | 306 | 0.523 | 100% |
| 8 | Ex. 8 | 180 C, 40 min. | 239 | 1.57 | 7.12 | 296 | 0.487 | 100% |
| 9 | Ex. 5 | 180 C, 40 min. | 247 | 1.54 | 9.1 | 415 | 0.485 | 100% |

| **Table 6: Comparative Experimental Results with varying amount of Toughener** | | | | | | | | |
|---|---|---|---|---|---|---|---|---|
| **S. No.** | **Exemplified Composition** | **Cure condition** | **Expansion, %** | **Lap shear (MPa)** | **Compression Strength** | **Compression Modulus (MPa)** | **Cylinder Density(G/CC)** | **Ductility** |
| 10 | Ex.5 | 180 C, 40 min. | 247 | 1.54 | 9.1 | 415 | 0.485 | 100% |
| 11 | Ex.9 | 180 C, 40 min. | 239 | 1.15 | 7.1 | 296 | 0.478 | 100% |

Table 4 outlines the experimental results for different expandable one-component thermosetting epoxy resin adhesives. These adhesives primarily vary in terms of the toughness improvers and curing systems employed, highlighting the effects of these variables on the final performance.

The results shown in Table 4 demonstrate that Example 5 achieves the ideal balance of adhesive and mechanical properties, particularly in terms of compression, expansion percentage, and ductility. Among the various compositions presented in Table 4, Example 5, which aligns with the claimed composition, proved to be the most effective in achieving the desired set of characteristic properties. Example 5 utilises a specific combination of zinc diacrylate based curing system and an ethylene vinyl acetate based toughness improver. In particular, Levapren NPG VP cured with Dymalink 633 exhibits better compression performance than with DICY & Urea. It has been observed that the specific compositions, as claimed in the present invention, were able to achieve the desired performance characteristics.

Table 5 depicts the experimental results obtained using different type of blowing agents. The results demonstrate that FN-78D as used in Example 5 gives excellent expansion %, without any detrimental effects on other desired properties.

Tale 6 depicts the experimental results obtained using varying amount of toughness improver **D.** The results demonstrate that about 10 wt% of toughness improver is sufficient to obtain the expandable one component thermosetting epoxy resin with desired adhesive and mechanical properties.

## Claims

1. One-component thermosetting epoxy resin adhesive, comprising:
a) at least one epoxy resin **A** having on average more than one epoxide group per molecule;
b) at least one latent hardener **H** for epoxy resins, wherein the latent hardener **H** is metal acrylate, preferably metal diacrylate, more preferably Zinc diacrylate (ZDA);
c) at least one physical and/or chemical blowing agent **BA;** and
e) at least at least one toughness improver **D,** wherein the toughness improver **D** is a synthetic rubber, preferably a copolymer of ethylene and vinyl acetate, more preferably an ethylene vinyl acetate rubber, wherein the amount of toughness improver **D** being from 5 - 40 wt.-%, based on the total weight of the one-component thermosetting epoxy resin adhesive.

2. The one-component thermosetting epoxy resin adhesive according to Claim 1, wherein the fraction of the epoxy resin **A** having on average more than one epoxide group per molecule is from 30 - 90 wt.-%, 35 - 85 wt.-%, 40 -75 wt.-%, more preferably 45 - 60 wt.-%, based on the total weight of the one-component thermosetting epoxy resin adhesive.

3. The one-component thermosetting epoxy resin adhesive according to any of the preceding claims, wherein the epoxy resin **A** is a solid epoxy resin.

4. The one-component thermosetting epoxy resin adhesive according to any of the preceding claims, wherein the fraction of the latent hardener **H** is 1 - 25 wt.-%, more preferably 10 - 20 wt.-%, based on the total weight of the one-component thermosetting epoxy resin adhesive.

5. The one-component thermosetting epoxy resin adhesive according to any of the preceding claims, wherein the fraction of the toughness improver **D** is 2 - 20 wt.-%, more preferably 5 - 15 wt.-%, based on the total weight of the one-component thermosetting epoxy resin adhesive.

6. The one-component thermosetting epoxy resin adhesive according to any of the preceding claims, further comprising at least one **wax,** preferably, the fraction of the **wax** is 1 - 10 wt.-%, 1.5 - 7.5 wt.-%, 2-5 wt.-%, more preferably 2 - 3 wt.-%, based on the total weight of the one-component thermosetting epoxy resin adhesive.

7. The one-component thermosetting epoxy resin adhesive according to any of the preceding claims, further comprising at least one **fiber,** preferably, the fraction of the **fiber** is 1 - 25 wt.-%, 1.5 - 20 wt.-%, 2-15 wt.-%, more preferably 5 - 15 wt.-%, based on the total weight of the one-component thermosetting epoxy resin adhesive.

8. The one-component thermosetting epoxy resin adhesive according to any of the preceding claims, wherein the blowing agent **BA** is a physical or chemical blowing agent preferably selected from p,p'-Oxybisbenzolsulfonylhydrazide and dry powder of unexpanded thermoplastic microspheres.

9. The one-component thermosetting epoxy resin composition according to any of the preceding claims, wherein the fraction of the blowing agent **BA** is 0.1-7.5 wt.-%, preferably 0.5-5 wt.-%, more preferably 1-4 wt.-% based on the total weight of the the one-component thermosetting epoxy resin adhesive.

10. The one-component thermosetting epoxy resin adhesive according to any of the preceding claims, further comprising at least one filler **F,** preferably, the fraction of the filler **F** is 5 - 40 wt.-%, based on the total weight of the one-component thermosetting epoxy resin adhesive.

11. One-component thermosetting epoxy resin adhesive, comprising:
a) 45-60 wt.-% of at least one epoxy resin **A** having on average more than one epoxide group per molecule;
b) 10-20 wt.-% of at least one latent hardener **H** for epoxy resins, wherein the latent hardener **H** is Zinc diacrylate (ZDA);
c) 1-4 wt.-% of at least one physical or chemical blowing agent **BA;**
e) 5-15 wt.-% of at least at least one toughness improver **D,** wherein the toughness improver **D** is a copolymer of ethylene and vinyl acetate, preferably an ethylene vinyl acetate rubber;
f) 5-15 wt.-% of at least one **fiber,** preferably a glassfiber; and
g) 1-20 wt.-% of at least one filler **F,** wherein the weight percentages are based on the total weight of the one-component thermosetting epoxy resin adhesive.

12. The one-component thermosetting epoxy resin adhesive according to any of the preceding claims, wherein the said one-component thermosetting epoxy resin adhesive has an expansion percentage in the range of 100-350%, preferably between 200-300% at a temperature of 180°C for 30 min, wherein the expansion is determined as described in the application.

13. A cured composition obtained by heat curing the one-component thermosetting epoxy resin adhesive according to any of the preceding claims, wherein the said cured composition is **characterized by** one or more of the following properties:
a) compression strength in the range of 5 - 20 MPa, preferably 6-15 MPa, wherein the compression strength is determined as described in the application;
b) compression modulus 100 MPa to 500 MPa, preferably 150 MPa to 400 MPa at 25°C, wherein the compression modulus is determined as described in the application; and
c) ductility above 70%, preferably above 80 %, wherein the ductility being determined is determined as described in the application.

14. A reinforcement element comprising the one-component thermosetting epoxy resin adhesive according to claims 1 - 12, in particular for reinforcement in the cavities of structural components, preferably in bodies and / or frames of means of transport and transportation.

15. A method for reinforcing structural components comprising the steps
i) placing a reinforcement element according to claim 14 in a cavity of a structural component, preferably in bodies and / or frames of means of transport and transportation;
ii) heating the reinforcement element to a temperature from 120 °C to 220 °C, preferably from 140 °C to 200 °C, preferably for 10 to 60 min.
